# FASCICULE DE BREVET EUROPEEN

(11) **EP 3 452 807 B1**
(45) Date de publication et mention de la délivrance du brevet: **31.03.2021**
(21) Numéro de dépôt: 17721612.4
(22) Date de dépôt: 02.05.2017
(51) Int. Cl.: G01N 21/03, G01N 21/47, G03H 1/04

(54) **SYSTÈME D'ANALYSE COMPORTANT UN DISPOSITIF DE CONFINEMENT À CHAMBRE DE MESURE DE TAILLE VARIABLE DÉLIMITÉE EN PARTIE PAR UNE MEMBRANE FLEXIBLE**
ANALYSESYSTEM UMFASSEND EINE BEGRENZUNGSVORRICHTUNG MIT EINER TEILWEISE DURCH EINE FLEXIBLE MEMBRAN BEGRENZTEN MESSKAMMER VARIABLER GRÖSSE
ANALYSIS SYSTEM COMPRISING A CONFINEMENT DEVICE HAVING A MEASUREMENT CHAMBER OF VARIABLE SIZE DELIMITED IN PART BY A FLEXIBLE MEMBRANE

(30) Priorité: 04.05.2016 FR 1654053
(43) Date de publication de la demande: 13.03.2019
(73) Titulaire: Ipratech SA, 7000 Mons (BE)
(72) Inventeur: ESTEBAN, Geoffrey, 34820 Teyran (FR); CUBETA, Jérémie, 7070 Le Roeulx (BE); SERGEANT, David, 7190 Ecaussines (BE); POSKIN, Thierry, 6230 Obaix (BE)
(74) Mandataire: INNOV-GROUP
(86) Numéro de dépôt international: PCT/EP2017/060328
(87) Numéro de publication internationale: WO 2017/191087

(56) Documents cités:
- WO-A1-2011/107102
- WO-A1-2012/119880
- GB-A- 1 054 813
- US-A- 3 679 315
- US-A- 5 750 998

## Description

### DOMAINE TECHNIQUE

Le domaine de l'invention est celui de l'analyse d'un liquide susceptible de contenir des analytes, éventuellement biologiques, le liquide étant présent dans un récipient de type bioréacteur, cuve ou conduit. L'invention concerne plus précisément un système d'analyse comportant un dispositif de confinement, autorisant une analyse en ligne du liquide. Le système d'analyse présente une application notamment dans l'évaluation de la concentration de cellules biologiques et la discrimination des cellules vivantes des cellules mortes.

### ÉTAT DE LA TECHNIQUE ANTÉRIEURE

Dans différents domaines industriels, tels que les industries chimiques, pharmaceutiques, ou alimentaires, il est nécessaire d'utiliser des dispositifs de mesure pour mesurer différentes propriétés physiques d'un liquide contenu dans un récipient, telles que la température, le pH, les taux d'oxygène et de CO2, la conductivité, la turbidité ou autre, le récipient pouvant être par exemple un bioréacteur, une cuve ou un conduit. Il peut également s'agir d'analyser des analytes présents dans le liquide, tels que des cellules biologiques.

C'est en particulier le cas lorsqu'on souhaite contrôler en temps réel la culture cellulaire du bioréacteur. Pour cela, il est connu d'utiliser notamment des sondes à immersion qui permettent d'évaluer la concentration des cellules dans un échantillon liquide présent dans un site de mesure de la sonde, à partir par exemple de la mesure du taux d'absorption d'un rayonnement lumineux émis en direction de l'échantillon liquide.

Lors de la mesure optique, il peut être utile d'imposer les dimensions de l'échantillon liquide à analyser, par exemple dans le but d'améliorer la résolution et la robustesse de la mesure optique, voire lorsqu'on souhaite effectuer un comptage des cellules vivantes au sein de l'échantillon liquide. Le document WO2015/011096 décrit un exemple de dispositif de confinement à immersion dont le site de mesure présente une taille variable, qui permet alors d'imposer une épaisseur à l'échantillon liquide présent dans le site de mesure.

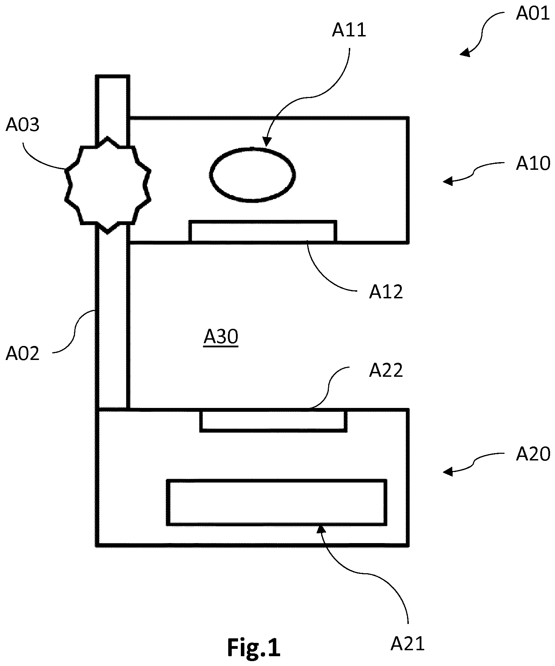

Comme l'illustre la figure 1, le dispositif A01 comporte une partie immergeable formée de deux logements étanches A10, A20 dont l'un est mobile en translation vis-à-vis de l'autre. L'espacement relatif entre les deux logements étanches A10, A20 définit un site de mesure A30 pouvant recevoir, lorsque le dispositif est immergé dans le liquide, une portion du liquide qui forme l'échantillon liquide à analyser. Le premier logement étanche A10 comporte une source de lumière A11 disposée en regard d'une fenêtre transparente A12 et le second logement étanche A20 comporte un photodétecteur A21 placé en regard d'une seconde fenêtre transparente A22. Les deux fenêtres A12, A22 sont orientées en vis-à-vis l'une de l'autre suivant le chemin optique défini par l'agencement relatif de la source de lumière A11 et du photodétecteur A21. Ainsi, le dispositif A01 permet d'illuminer l'échantillon liquide présent dans le site de mesure A30 par un rayonnement lumineux émis par la source de lumière A11 et transmis par la fenêtre A12 et d'acquérir une image de l'échantillon éclairé, et plus précisément une image de diffraction issue de l'échantillon liquide, par le photodétecteur A21. Dans le but d'adapter l'écart relatif entre les deux fenêtres transparentes A12, A22 et ainsi imposer une épaisseur voulue à l'échantillon liquide, le logement mobile A20 est fixé à une tige A02 qui peut être déplacée vis-à-vis du premier logement A10 au moyen d'une molette A03. Ainsi, l'actionnement de la molette A03 permet de définir l'écart entre les deux logements A10, A20, et donc de définir l'épaisseur de l'échantillon liquide.

Les documents WO2012119880 et GB1054813 décrivent chacun un dispositif de confinement comportant une chambre de mesure délimitée par deux fenêtres transparentes, lesquelles sont reliées l'une à l'autre par une membrane flexible. La distance entre les deux fenêtres transparentes peut être ajustée de manière à définir le chemin optique lors de l'étape de mesure.

Le document WO2011/107102 porte sur une chambre de mesure flexible pour l'analyse d'échantillons liquides. Il comporte un tube flexible dont une zone forme la chambre de mesure. Une pompe assure l'écoulement dans le tube flexible. Lors d'une phase d'analyse de l'échantillon liquide, des pinces bloquent l'écoulement et la pompe est désactivée.

### EXPOSÉ DE L'INVENTION

L'objet de l'invention est un système d'analyse selon la revendication 1, le système d'analyse comportant un dispositif de confinement d'un échantillon liquide destiné à être analysé, comportant une chambre de mesure apte à recevoir ledit échantillon liquide, et délimitée au moins en partie par une première et une deuxième surfaces dites de mesure, lesdites surfaces de mesure étant transparentes vis-à-vis d'un rayonnement lumineux dit de mesure, et disposées en regard l'une de l'autre de sorte qu'une distance entre lesdites surfaces de mesure définit une épaisseur de la chambre de mesure ; au moins une première surface de mesure étant mobile relativement à la deuxième surface de mesure, de manière à permettre une variation de l'épaisseur de la chambre de mesure. La chambre de mesure est en outre délimitée latéralement par une membrane flexible fixée de manière étanche aux surfaces de mesure, autorisant la variation de l'épaisseur de la chambre de mesure.

Le dispositif de confinement comporte en outre au moins un conduit de prélèvement communiquant fluidiquement avec la chambre de mesure, et destiné à être raccordé de manière étanche à un récipient de façon à pouvoir prélever l'échantillon liquide dudit récipient. Le système d'analyse comporte en outre un dispositif de mesure optique adapté à émettre un rayonnement lumineux de mesure en direction de la chambre de mesure, et à détecter un rayonnement lumineux transmis par la chambre de mesure, celle-ci présentant une épaisseur égale à une valeur minimale (eₘₑₛ) dite de mesure , et un dispositif d'écoulement adapté à provoquer au moins l'écoulement de liquide dans le conduit de prélèvement à partir du récipient jusqu'à la chambre de mesure.

Selon l'invention, le système d'analyse comporte en outre un dispositif d'actionnement adapté à assurer un déplacement relatif des surfaces de mesure l'une par rapport à l'autre se traduisant par une variation de l'épaisseur de la chambre de mesure, et ainsi un écartement des deux surfaces de mesure l'une de l'autre de manière à permettre un renouvellement du liquide présent dans la chambre de mesure, l'épaisseur de la chambre de mesure étant égale à une valeur maximale dite de renouvellement, celle-ci étant supérieure à la valeur minimale de mesure.

Certains aspects préférés mais non limitatifs de ce système d'analyse sont les suivants.

Le dispositif d'actionnement peut être adapté à assurer un écartement relatif des surfaces de mesure d'une position dite rapprochée dans laquelle une épaisseur de la chambre de mesure est égale à la valeur minimale dite de mesure, jusqu'à une position écartée dite de renouvellement dans laquelle l'épaisseur de la chambre de mesure est égale à la valeur maximale de renouvellement, puis un rapprochement relatif des surfaces de mesure de la position écartée de renouvellement jusqu'à la position rapprochée.

La valeur maximale de renouvellement peut être telle que le volume de liquide contenu dans la chambre de mesure est alors au minimum 10 fois supérieure au volume de liquide contenu dans la chambre de mesure lorsque l'épaisseur de celle-ci présente la valeur minimale de mesure.

La valeur maximale de renouvellement peut être telle que le volume de liquide contenu dans la chambre de mesure et dans le conduit de prélèvement est alors au minimum 10 fois supérieure au volume de liquide contenu dans la chambre de mesure et dans le conduit de prélèvement lors de l'étape de mesure optique lorsque l'épaisseur de la chambre de mesure présente la valeur minimale de mesure.

Le dispositif de confinement peut comporter deux plaques rigides dont une face interne de chaque plaque forme l'une desdites surfaces de mesure, la membrane flexible étant fixée à la bordure de chaque plaque rigide par une portion de fixation.

Chaque portion de fixation peut être fixée à une plaque rigide au niveau d'une face externe opposée à la surface de mesure correspondante et/ou à une face latérale de la plaque rigide.

Les portions de fixation et la membrane flexible peuvent être réalisées d'un seul tenant et en un même matériau.

Le dispositif de confinement peut comprendre une portion de connexion fluidique comportant un conduit d'admission apte à être raccordé au conduit de prélèvement et dont des dimensions transversales sont sensiblement constantes lors d'une variation de l'épaisseur de la chambre de mesure, et une portion intermédiaire assurant la connexion fluidique et la jonction mécanique entre le conduit d'admission et la chambre de mesure.

Le dispositif de mesure optique peut comporter une source de lumière disposée en regard de la première surface de mesure et un photodétecteur disposé en regard de la deuxième surface de mesure. La source de lumière peut être disposée à une distance supérieure ou égale à 1cm de la première surface de mesure et/ou le photodétecteur est disposé à une distance inférieure ou égale à 1cm de la deuxième surface de mesure.

Le dispositif d'actionnement peut comporter un organe de déplacement adapté à déplacer au moins une surface de mesure suivant un axe sensiblement orthogonal aux surfaces de mesure, et un actionneur adapté à déplacer l'organe de déplacement, de manière à assurer une variation de l'épaisseur de la chambre de mesure.

Au moins un organe de butée peut être disposé sur la première et/ou la deuxième surface de mesure de manière à former une butée entre les deux surfaces de mesure, et/ou dans le dispositif d'actionnement de manière à limiter le déplacement de l'organe de déplacement, définissant ainsi une épaisseur minimale de la chambre de mesure, celle-ci étant inférieure ou égale à 500µm, et de préférence inférieure ou égale à 300µm.

Selon l'invention, le dispositif d'écoulement comporte le dispositif de confinement associé au dispositif d'actionnement, de sorte qu'une augmentation de l'épaisseur de la chambre de mesure provoque l'écoulement de liquide dans le conduit de prélèvement à partir du récipient jusqu'à la chambre de mesure. Le dispositif d'écoulement peut comporter au moins une valve anti-retour raccordée fluidiquement en série avec la chambre de mesure, par exemple deux valves anti-retour raccordées fluidiquement de part et d'autre de la chambre de mesure, de manière à ce que le liquide s'écoule dans une même direction lors des phases de rapprochement et d'écartement des surfaces de mesure. La chambre de mesure est alors raccordée à un conduit de prélèvement et à un conduit d'évacuation. Selon un agencement non-revendiqué, le dispositif d'écoulement peut comporter une valve *bypass* raccordée fluidiquement en parallèle avec la chambre de mesure, la valve *bypass* présentant un seuil d'ouverture de sorte que la valve *bypass* est passante lorsque la chambre de mesure présente une épaisseur minimale de mesure, et que la valve *bypass* est bloquée lorsque la chambre présente une épaisseur supérieure à la valeur minimale de mesure. En dehors de l'étendue de la revendication 1, le dispositif d'écoulement peut comporter une pompe hydraulique raccordée en série avec la chambre de mesure de manière à assurer l'écoulement du liquide. Le dispositif d'écoulement peut comporter le dispositif de confinement associé au dispositif d'actionnement, la chambre de mesure étant raccordée fluidiquement à un unique conduit de prélèvement et d'évacuation du liquide, destiné à communiquer avec le récipient.

L'invention porte également sur un procédé d'analyse d'un échantillon liquide présent dans un système d'analyse selon l'une quelconque des caractéristiques précédentes, comportant les étapes suivantes :
- introduction d'un échantillon liquide dans la chambre de mesure à partir d'un récipient ;
- mesure optique d'au moins une propriété relative à l'échantillon liquide présent dans la chambre de mesure, l'épaisseur de la chambre de mesure étant égale à une valeur minimale dite de mesure ;
- au moins un écartement des deux surfaces de mesure l'une de l'autre de manière à permettre un renouvellement du liquide présent dans la chambre de mesure, l'épaisseur de la chambre de mesure étant égale à une valeur maximale dite de renouvellement, celle-ci étant supérieure à la valeur minimale de mesure.

Le procédé peut comporter plusieurs étapes de mesure optique successives, au moins une séquence d'une étape d'écartement suivie d'une étape de rapprochement des deux surfaces de mesure l'une par rapport à l'autre étant effectuées entre deux étapes de mesure optique successives, de sorte que l'épaisseur de la chambre de mesure augmente de la valeur minimale de mesure jusqu'à au moins la valeur maximale, puis diminue jusqu'à la valeur minimale de mesure.

Le procédé peut comporter une étape préalable de raccordement étanche, et de préférence stérile, dudit conduit fluidique de prélèvement audit récipient.

La valeur maximale de renouvellement peut être telle que le volume de liquide contenu dans la chambre de mesure lors de l'étape d'écartement est au minimum 10 fois supérieure au volume de liquide contenu dans la chambre de mesure lors de l'étape de mesure optique.

La valeur maximale de renouvellement peut être telle que le volume de liquide contenu dans la chambre de mesure et dans le conduit de prélèvement lors de l'étape d'écartement est au minimum 10 fois supérieure au volume de liquide contenu dans la chambre de mesure et dans le conduit de prélèvement lors de l'étape de mesure optique.

Le procédé peut comporter plusieurs étapes de mesure optique, au moins une séquence d'une étape d'écartement et d'une étape de rapprochement des deux surfaces de mesure l'une par rapport à l'autre étant effectuées entre deux étapes de mesure optique successives, l'épaisseur de la chambre de mesure lors de l'étape de rapprochement étant égale à une valeur basse dite de renouvellement, celle-ci étant inférieure à la valeur maximale de renouvellement et supérieure ou égale à la valeur de mesure.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés, sur lesquels :
La figure 1 est une vue schématique d'un système d'analyse comportant un dispositif de confinement, selon un exemple de l'art antérieur;
les figures 2A, 2B et 2C sont des vues schématiques d'un dispositif de confinement respectivement en perspective, en coupe longitudinale et en coupe transversale ;
les figures 3A et 3B sont des vues schématiques en coupe longitudinale d'un système d'analyse comportant un dispositif de confinement, un dispositif de mesure optique et un dispositif d'actionnement ;
les figures 4A à 4E sont des vues schématiques en coupe transversale du dispositif de confinement, pour différentes étapes d'un exemple de procédé d'analyse d'un échantillon liquide ;
les figures 5A à 5E sont des vues schématiques de différentes variantes d'un système d'analyse raccordé fluidiquement à un récipient contenant un liquide à analyser.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un système d'analyse permettant l'analyse d'un échantillon d'un liquide présent dans un récipient, de préférence en ligne, c'est-à-dire que l'échantillon liquide peut être réintroduit dans le récipient après analyse. L'échantillon liquide peut être une portion d'un liquide propre à contenir des analytes tels que des cellules biologiques. Le récipient peut ainsi être un bioréacteur, une cuve, un conduit ou autre. Le récipient peut être réalisé en un matériau polymère, par exemple en plastique, en inox 316L, en verre ou en un autre matériau adéquat. Il peut s'agir d'un récipient à usage unique.

L'analyse de l'échantillon revient à mesurer et évaluer un ou plusieurs paramètres représentatifs de l'échantillon liquide. Ces paramètres peuvent être issus de propriétés physiques de l'échantillon liquide, telles que le taux d'absorption d'un rayonnement lumineux incident, la colorimétrie, une ou plusieurs figures d'interférence, ou autres. Il peut ainsi s'agir de détecter et d'évaluer la présence, la concentration et/ou le type d'analytes présents dans l'échantillon liquide, par exemple des particules biologiques telles que des cellules, des bactéries ou autres. Dans le cas de la culture cellulaire dans un bioréacteur, le dispositif de confinement permet notamment de mesurer la concentration cellulaire et de réaliser une discrimination entre les cellules vivantes et les cellules mortes par une technique de mesure optique par imagerie sans lentille afin de déterminer la viabilité cellulaire.

Pour cela, le dispositif de confinement comporte une chambre de mesure adaptée à recevoir l'échantillon liquide dont l'épaisseur peut varier dans le temps. Il est destiné à coopérer avec un dispositif de mesure optique ainsi qu'avec un dispositif d'actionnement permettant de faire varier l'épaisseur de la chambre de mesure. Il peut également comporter un dispositif d'écoulement assurant l'écoulement du liquide entre le récipient et la chambre de mesure. L'ensemble de ces dispositifs forme un système d'analyse dont la chambre de mesure est destinée à être placé au dehors du récipient et à être raccordé fluidiquement avec ce dernier, de manière étanche et de préférence stérile.

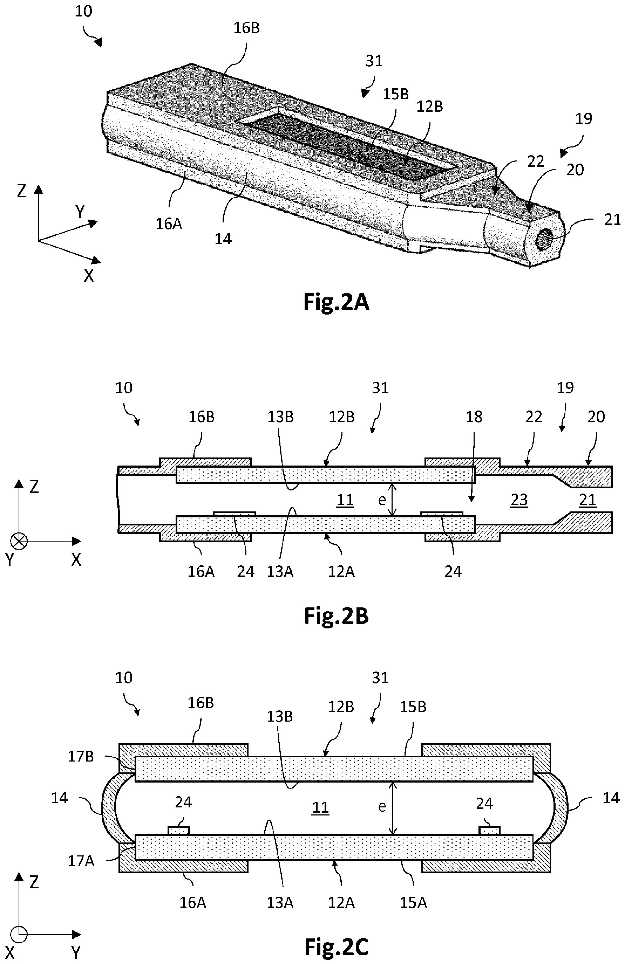

Les figures 2A, 2B et 2C sont des vues schématiques d'un dispositif de confinement 10, respectivement en perspective, en coupe longitudinale, et en coupe transversale.

On définit ici et pour la suite de la description un repère direct tridimensionnel (X,Y,Z), où les axes X et Y forment un plan parallèle au plan principal des fenêtres transparentes 12A, 12B qui délimitent la chambre de mesure 11 suivant la dimension d'épaisseur de cette dernière. L'axe Z est orienté de manière sensiblement orthogonale au plan principal des fenêtres transparentes 12A, 12B, c'est-à-dire suivant la dimension d'épaisseur de la chambre de mesure 11.

Le dispositif de confinement 10 comporte deux surfaces de mesure 13A, 13B, disposées en regard l'une de l'autre et reliées l'une à l'autre par une membrane flexible 14, de manière à délimiter un espace interne formant une chambre de mesure 11 apte à recevoir un échantillon à analyser.

Chaque surface de mesure 13A, 13B est une face interne d'une fenêtre transparente 12A, 12B qui se présente sous la forme d'une plaque rigide. Les surfaces de mesure 13A, 13B sont agencées de manière sensiblement parallèle l'une à l'autre et de préférence sensiblement planes.

Chaque plaque rigide 12A, 12B présente une surface libre au niveau de sa face externe 15A, 15B, c'est-à-dire non recouverte par un matériau opaque, de manière à former une zone de mesure 31 adaptée à la transmission d'un faisceau lumineux dit de mesure émis par le dispositif de mesure optique (non représenté).

Les plaques rigides 12A, 12B présentent ici une forme sensiblement rectangulaire dans le plan (X,Y), mais elles pourraient présenter d'autres formes, par exemple carrée, polygonale ou circulaire. Elles présentent également des dimensions, dans le plan (X,Y), de l'ordre de quelques dizaines millimètres à quelques centaines de millimètres, par exemple ici, à titre purement illustratif, une longueur L suivant l'axe X de 50mm pour une largeur suivant l'axe Y de 20mm. Elles peuvent présenter une épaisseur, suivant l'axe Z, de l'ordre du millimètre, par exemple comprise entre 0,5mm et 10mm, par exemple 2mm, qui peut être sensiblement constante en tout point de la plaque ou qui peut être moindre au niveau de la zone de mesure 31. L'épaisseur des plaques rigides 12A, 12B peut être identique ou non d'une plaque rigide à l'autre.

Chaque plaque rigide 12A, 12B est, au moins dans la zone de mesure 31, réalisée en un matériau transparent au faisceau lumineux de mesure ou à un faisceau lumineux de réponse. Par matériau transparent, on entend que le taux de transmission du matériau est supérieur ou égal à 50%, de préférence à 75%, et de préférence encore à 90%, voire davantage. Le matériau transparent peut être du saphir, du borosilicate, du quart, ou du polycarbonate ou autre, et est avantageusement de qualité classe VI selon la convention USP (*United States Pharmacopeia,* en anglais) assurant ainsi une compatibilité du matériau des fenêtres transparentes 12A, 12B avec le milieu liquide contenu dans le récipient.

Chaque plaque rigide 12A, 12B est avantageusement formée en un unique matériau transparent ou peut être formée d'un empilement de plusieurs matériaux transparents. Elle peut également comporter un matériau opaque, c'est-à-dire non transparent, en dehors de la zone de mesure 31.

Le dispositif de confinement 10 comporte en outre une membrane flexible 14, fixée de manière étanche aux surfaces de mesure 13A, 13B, ici au niveau de la bordure de chaque plaque rigide 12A, 12B, de manière à délimiter, avec les surfaces de mesure 13A, 13B, la chambre de mesure 11. Ainsi, la chambre de mesure 11 est délimitée suivant l'axe Z de son épaisseur par les surfaces de mesure 13A, 13B, et est délimitée latéralement par la membrane flexible 14, c'est-à-dire dans le plan (X,Y) sensiblement orthogonal à l'axe Z. La membrane flexible 14 peut être sensiblement périphérique, de sorte qu'elle peut entourer la chambre de mesure 11 de manière sensiblement continue dans le plan (X,Y), moyennant la présence d'au moins un orifice 18 d'admission et/ou d'évacuation du liquide.

La membrane flexible 14 peut présenter une épaisseur de l'ordre du millimètre, par exemple comprise entre 0,5mm et 5mm, par exemple de l'ordre de 1mm. La membrane flexible 14 est réalisée en un matériau souple et étanche, apte à se déformer pour autoriser le déplacement en translation suivant l'axe Z d'au moins une fenêtre transparente vis-à-vis de l'autre. Elle peut être réalisée en silicone, en élastomère tel que du FFKM (perfluoroélastomère), du FKM (fluoroélastomère), du EPDM (éthylène-propylène-diène monomère), voire en tout autre matériau présentant des propriétés d'étanchéité et de flexibilité suffisantes. Le matériau de la membrane flexible 14 est en outre avantageusement de qualité classe VI selon la convention USP.

La membrane flexible 14 est fixée de manière étanche aux surfaces de mesure 13A, 13B, et plus précisément aux plaques rigides 12A, 12B par l'intermédiaire de portions de fixation 16A, 16B. Chaque portion de fixation 16A, 16B recouvre ici une partie de la face externe 15A, 15B d'une plaque rigide 12A, 12B, au niveau de la bordure de cette dernière, et au moins une partie de la face latérale 17A, 17B de la plaque rigide 12A, 12B. La partie centrale de la face externe 15A, 15B de chaque plaque rigide 12A, 12B, non recouverte par les portions de fixation 16A, 16B, forme la zone de mesure 31.

Les portions de fixation 16A, 16B peuvent être réalisées en silicone, en élastomère tel que du FFKM (perfluoroélastomère), du FKM (fluoroélastomère), du EPDM (éthylène-propylène-diène monomère), voire en tout autre matériau présentant des propriétés d'étanchéité et d'adhérence suffisantes. Le matériau de la membrane flexible 14 est en outre avantageusement de qualité classe VI selon la convention USP. Avantageusement, la membrane flexible 14 et les portions de fixation 16A, 16B peuvent être réalisées d'un seul tenant et dans le même matériau. Les portions de fixation 16A, 16B peuvent être formées par surmoulage des plaques rigides 12A, 12B au niveau de leur bordure respective. Elles peuvent être fixées aux plaques rigides 12A, 12B par le biais d'une colle étanche.

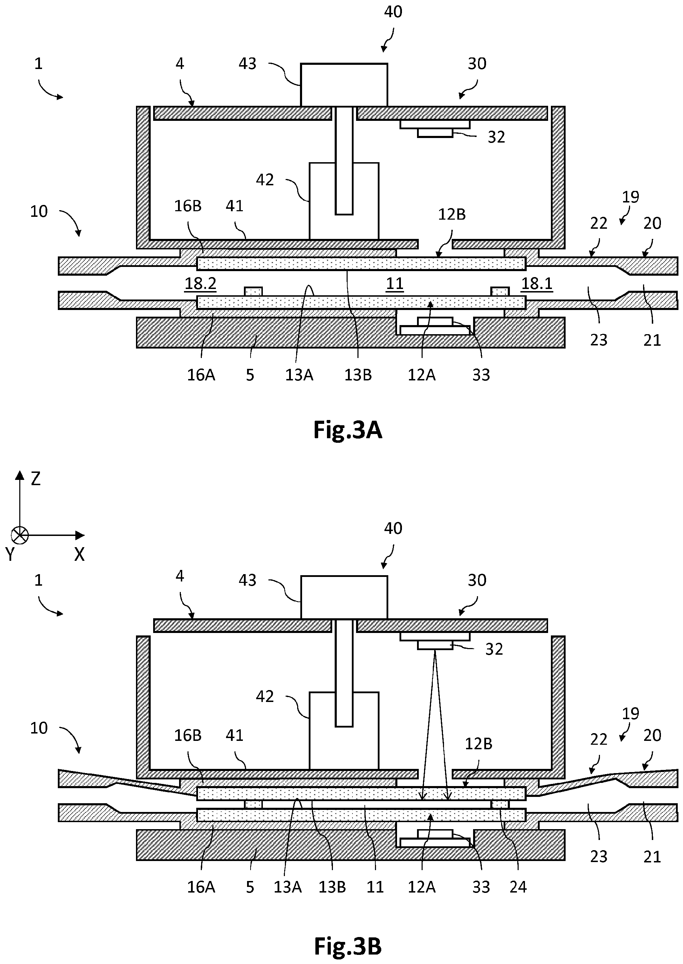

Le dispositif de confinement 10 comporte au moins un orifice 18 permettant l'introduction et/ou l'évacuation du liquide vis-à-vis de la chambre de mesure 11. Cet orifice 18 peut être délimité par la membrane flexible 14, et est situé ici dans une partie de raccordement 19 du dispositif de confinement 10 à un conduit fluidique, ici un tube de prélèvement (non représenté), destiné à être connecté au récipient contenant le liquide à analyser. Dans cet exemple, le dispositif de confinement 10 comporte un unique orifice 18 assurant alternativement l'entrée et la sortie du liquide dans la chambre de mesure 11. En variante, et comme l'illustrent les figures 3A et 3B, il peut comporter un premier orifice 18.1 pour l'introduction du liquide dans la chambre et un deuxième orifice 18.2 pour la sortie du liquide hors de la chambre.

Le dispositif de confinement 10 comporte ici une partie de raccordement 19 destinée à assurer la jonction mécanique entre la chambre de mesure 11 et le conduit fluidique de prélèvement ou d'évacuation.

Cette partie de raccordement 19 comporte une portion de connexion fluidique 20 destinée à être connectée fluidiquement au conduit de prélèvement ou d'évacuation ou réalisée d'un seul tenant avec ce conduit. La portion de connexion fluidique 20 est dimensionnée de sorte que sa taille suivant l'axe Z ne varie sensiblement pas lorsque les surfaces de mesure 13A, 13B de la chambre de mesure 11 sont rapprochées et éloignées l'une de l'autre. Elle comporte un conduit fluidique d'admission 21 délimité par un matériau réalisé d'un seul tenant et dans le même matériau que la membrane flexible 14. Les dimensions transversales du matériau sont telles que ce conduit 21 présente un diamètre interne dont la valeur n'est sensiblement pas modifiée lorsque la chambre de mesure 11 varie en épaisseur. Le diamètre interne peut être de l'ordre du millimètre, par exemple compris entre 1mm et 5mm. L'épaisseur du matériau entourant le conduit d'admission 21 peut être égale à quelques millimètres. La portion de connexion 20 peut présenter une longueur permettant son raccordement à un tube de prélèvement, par exemple une longueur comprise entre quelques millimètres et quelques centimètres. En variante, elle peut présenter une longueur telle qu'elle forme elle-même le conduit de prélèvement ou d'évacuation.

La partie de raccordement 19 comporte en outre une portion intermédiaire 22 assurant la connexion fluidique entre la portion de connexion 20 et la chambre de mesure 11, ainsi que la jonction mécanique entre la portion de connexion 20 dont les dimensions transversales sont sensiblement constantes au cours du procédé d'analyse, et la chambre de mesure 11 dont l'épaisseur varie au cours du procédé d'analyse. Cette portion intermédiaire 22 comporte un conduit fluidique intermédiaire 23 délimité latéralement par la membrane flexible 14 et délimité suivant l'axe Z par les portions de fixation 16A, 16B. Cette portion intermédiaire 22 est apte à se déformer suivant l'axe Z à mesure que l'épaisseur de la chambre de mesure 11 est modifiée. Aussi le conduit intermédiaire 23 présente ainsi une première valeur d'épaisseur du côté de la chambre de mesure 11 et une seconde valeur d'épaisseur du côté de la portion de connexion 20. Au cours du procédé d'analyse, la première valeur est sensiblement égale à celle de l'épaisseur de la chambre de mesure 11 et la seconde valeur est sensiblement constante dans le temps.

Le dispositif de confinement 10 comporte un conduit fluidique de prélèvement (non représenté) destiné à être raccordé fluidiquement au récipient. Il peut s'agir d'un conduit rapporté, c'est-à-dire distinct de la partie de raccordement, et fixé de manière étanche et de préférence stérile à la portion de connexion fluidique 20. Il peut en variante être un conduit réalisé d'un seul tenant et en un même matériau avec la portion de connexion 20. Le conduit de prélèvement assure donc la communication fluidique entre le récipient et la chambre de mesure 11. Il présente une longueur pouvant être de l'ordre de quelques dizaines de centimètres, par exemple 20cm, voire davantage et une dimension interne de l'ordre de, par exemple, un à quelques millimètres. Il peut être réalisé en silicone, en élastomère tel que du FFKM (perfluoroélastomère), du FKM (fluoroélastomère), du EPDM (éthylène-propylène-diène monomère), voire en tout autre matériau présentant les propriétés d'étanchéité et de flexibilité nécessaires, et avantageusement de classe VI selon la convention USP.

Le conduit de prélèvement peut être raccordé mécaniquement à la platine du récipient, c'est-à-dire à une partie de plaque rigide formant le récipient. Il peut ainsi être en partie introduit dans le récipient puis assemblé à la platine de manière étanche et de préférence stérile. Le conduit de prélèvement présente alors une partie située à l'intérieur du récipient qui se poursuit par une partie située à l'extérieur du récipient qui rejoint la portion de connexion 20 du dispositif de confinement 10. En variante, le conduit de prélèvement peut être raccordé à un tube intermédiaire assurant la communication fluidique à un récipient souple, de manière étanche et de préférence stérile. Le raccordement peut être effectué au moyen d'un dispositif de raccordement stérile tel qu'une thermo-soudeuse.

Comme illustré sur les figures 2A à 2C, le dispositif de confinement 10 comporte un unique conduit de prélèvement. Il assure alors également la fonction d'évacuation du liquide contenu dans la chambre de mesure 11. Le liquide évacué peut être réintroduit dans le récipient, dans le cadre d'une analyse du liquide en ligne, ou peut être évacué non pas dans le récipient mais dans une seconde enceinte distincte du récipient. Comme décrit plus loin en référence aux figures 3A et 3B, le dispositif de confinement 10 peut comporter un conduit de prélèvement débouchant dans une première extrémité 18.1 de la chambre de mesure 11, et un conduit fluidique d'évacuation débouchant dans une deuxième extrémité 18.2 distincte de la première extrémité 18.1. Dans ce cas, le dispositif de confinement 10 comporte une deuxième partie de raccordement, identique ou similaire à la partie de raccordement déjà décrite, qui assure la connexion fluidique et la jonction mécanique entre le conduit d'évacuation et la chambre de mesure 11.

Dans cet exemple, le dispositif de confinement 10 comporte au moins un organe de butée 24 disposé au niveau de l'une et/ou l'autre des surfaces de mesure 13A, 13B, permettant d'assurer une butée entre ces surfaces. Ici, deux organes de butée 24 sont disposés en bordure de la surface de mesure 16A de manière à ne pas perturber le faisceau lumineux émis lors d'une étape de mesure optique. Chaque organe de butée 24 présente une épaisseur qui définit un écartement relatif minimal entre les surfaces de mesure 13A, 13B, et ainsi une valeur minimale dite de mesure eₘₑₛ de l'épaisseur de la chambre. Il présente une épaisseur de l'ordre de quelques microns à quelques centaines de microns, par exemple une épaisseur comprise entre 5µm et 500µm, et de préférence comprise entre 10µm et 300µm, par exemple 20µm, en fonction notamment de la taille des analytes éventuellement présents dans l'échantillon liquide. Chaque organe de butée 24 peut être un plot ou une ligne en saillie vis-à-vis de la surface de mesure 16A, réalisé en un matériau rapporté et fixé à la surface de mesure 16A, ou réalisé d'un seul tenant et en un même matériau avec la plaque rigide 12A.

En variante ou en complément, la butée peut être assurée par le dispositif d'actionnement décrit plus loin, par exemple par des organes de butée limitant la course de déplacement de la ou des pièces assurant le rapprochement des surfaces de mesure 13A, 13B l'une vers l'autre. Elle peut également être assurée sans organes spécifiques de butée, mais par la précision du déplacement desdites pièces.

Ainsi, la chambre de mesure 11 est un espace interne du dispositif de confinement 10, délimitée suivant l'axe Z par les deux surfaces de mesure 13A, 13B des plaques rigides 12A, 12B, et dans le plan (X,Y) par la membrane flexible 14. La rigidité des plaques 12A, 12B et la flexibilité de la membrane 14 sont telles qu'un effort mécanique appliqué à au moins l'une des plaques 12A, 12B suivant l'axe Z entraîne le déplacement des plaques rigides 12A, 12B l'une vis-à-vis de l'autre sans déformation mécanique des plaques rigides 12A, 12B, les surfaces de mesure 13A, 13B restant sensiblement parallèles entre elles.

Comme mentionné précédemment, l'épaisseur de la chambre de mesure 11 peut présenter une valeur minimale eₘₑₛ dite de mesure, définie par exemple lorsque les surfaces de mesure 13A, 13B sont en butée l'une contre l'autre au niveau des organes de butée 24. La valeur minimale de mesure peut être de l'ordre de quelques microns à quelques centaines de microns, par exemple égale à 20µm environ. Le volume de la chambre de mesure 11 est alors défini par les dimensions transversales dans le plan (X,Y), par exemple la longueur L et la largeur l, et par l'épaisseur minimale de mesure eₘₑₛ.

Lorsque les deux surfaces de mesure 13A, 13B sont écartées l'une de l'autre, l'épaisseur de la chambre de mesure 11 peut alors présenter une valeur maximale e₂ dite de renouvellement. L'épaisseur de la chambre de mesure 11 peut également présenter une valeur intermédiaire, dite valeur basse e₁ de renouvellement de liquide, dans laquelle les deux surfaces 13A, 13B sont rapprochées l'une de l'autre. La valeur basse e₁ est alors inférieure à e₂ et supérieure ou égale à eₘₑₛ.

De préférence, l'épaisseur maximale e₂ de renouvellement est telle que le liquide présent dans la chambre de mesure 11 est sensiblement renouvelé entre deux étapes successives de mesure optique, lors desquelles la chambre de mesure 11 présente l'épaisseur minimale eₘₑₛ de mesure. En d'autres termes, l'épaisseur haute e₂ est telle que le volume de la chambre de mesure 11 dans cette configuration est supérieur ou égal à au moins 10 fois, voire au moins 50 fois, voire au moins 100 fois, le volume de la chambre de mesure 11 dans la configuration de mesure. Ainsi, dans le cas où l'épaisseur de mesure eₘₑₛ est de l'ordre de 20µm et que l'on souhaite un renouvellement du liquide de 99%, la valeur haute de renouvellement e₂ sera égale ou supérieure à 2mm.

De préférence, l'épaisseur maximale e₂ de renouvellement est telle que le liquide présent dans la chambre de mesure 11 mais également présent dans le conduit de prélèvement reliant la chambre de mesure 11 au récipient est sensiblement renouvelé entre deux étapes successives de mesure optique. En d'autres termes, il est avantageux que cette valeur e₂ soit telle que le volume de la chambre de mesure 11 et du volume du tube de prélèvement dans cette configuration est supérieur ou égal à au moins 10 fois, voire au moins 50 fois, voire au moins 100 fois, le volume de la chambre de mesure 11 et du conduit de prélèvement dans la configuration de mesure. Ainsi, dans le cas où la chambre de mesure 11 présente une longueur L de 50mm et une largeur l de 20mm, et où le conduit de prélèvement présente un diamètre interne de 1mm pour une longueur de 200mm, l'épaisseur de mesure eₘₑₛ étant de l'ordre de 20µm, une valeur haute de renouvellement e₂ égale à 5mm conduit à un renouvellement de 97% du liquide présent dans la chambre de mesure 11 et dans le conduit de prélèvement.

Ainsi, le dispositif de confinement 10, lorsqu'il est raccordé fluidiquement au récipient par le conduit de prélèvement, peut recevoir dans la chambre de mesure 11 un échantillon du liquide contenu dans le récipient. On limite ainsi toute immersion de la chambre de mesure 11 directement à l'intérieur du récipient et ainsi les risques de pollution ou de contamination du liquide présent dans le récipient.

La chambre de mesure 11 étant délimitée par les surfaces de mesure 13A, 13B transparentes, et par la membrane flexible 14 qui relie entre elles les surfaces de mesure 13A, 13B de manière étanche, il est alors possible de faire varier l'épaisseur de la chambre de mesure 11 pour d'une part réaliser une mesure optique au travers des surfaces de mesure 13A, 13B transparentes, et d'autre part réaliser un renouvellement du liquide contenu dans la chambre de mesure 11. La variation de l'épaisseur de la chambre de mesure 11 permet alors de limiter les risques d'obstruction de la chambre de mesure 11 par des analytes d'intérêt, mais également de limiter les risques d'apparition de bulles de gaz dans la chambre de mesure 11 susceptibles de perturber l'analyse.

La chambre de mesure 11 peut présenter une épaisseur inférieure ou égale à 500µm, voire inférieure ou égale à 300µm, par exemple égale à 50µm, 20µm ou moins. L'épaisseur de la chambre de mesure 11 peut alors être du même ordre de grandeur que la taille moyenne des analytes d'intérêt, par exemple de l'ordre de quelques dizaines de microns, ce qui permet de réaliser une analyse particulièrement précise des propriétés de l'échantillon liquide.

De manière avantageuse, le dispositif de confinement 10 ne comporte pas de chambre de mélange contenant des réactifs destinés à réagir avec les analytes présents dans le liquide à analyser. Comme mentionné plus loin, une mesure optique par imagerie sans lentille peut être mise en œuvre. On évite ainsi toute pollution du liquide ou modification de ses propriétés physiques et/ou chimiques, ce qui autorise l'analyse en ligne du liquide du récipient, c'est-à-dire que le liquide introduit dans la chambre de mesure 11 peut ensuite être réinjecté dans le récipient initial.

Les figures 3A et 3B sont des vues en coupe longitudinale d'un système d'analyse comportant un dispositif de confinement 10, un dispositif d'actionnement 40 adapté à faire varier l'épaisseur de la chambre de mesure 11, et un dispositif de mesure optique. Le dispositif d'écoulement n'est pas représenté. La figure 3A illustre le système d'analyse 1 dans une configuration de renouvellement de liquide, et la figure 3B illustre une configuration de mesure du système d'analyse 1 dans laquelle les surfaces de mesure 13A, 13B sont en butée l'une contre l'autre au niveau des organes de butée 24.

Le dispositif de confinement 10 comporte ici un premier orifice 18.1 assurant l'introduction du liquide dans la chambre de mesure 11 à partir d'un conduit de prélèvement raccordé au récipient, et un deuxième orifice 18.2 assurant l'évacuation du liquide hors de la chambre de mesure 11. Ce deuxième orifice 18.2 peut être connecté fluidiquement à un conduit d'évacuation, ce dernier pouvant être relié ou non au récipient. Dans cet exemple, les deux orifices sont opposés l'un à l'autre vis-à-vis de la chambre de mesure 11.

Un dispositif de mesure optique 30 est disposé vis-à-vis du dispositif de confinement 10 de manière à pouvoir éclairer l'échantillon liquide présent dans la chambre de mesure 11 et à détecter le rayonnement provenant de l'échantillon en réponse au rayonnement d'excitation. Il comporte une source de lumière 32 disposée en regard de la fenêtre transparente 12B suivant l'axe Z. La source lumineuse 32 est donc disposée de manière à pouvoir illuminer la partie de la chambre de mesure 11 délimitée par les deux surfaces de mesure 13A, 13B, suivant une direction d'éclairement ici parallèle à l'axe Z. La source lumineuse 32 peut être une ou plusieurs diodes électroluminescentes, voire une diode laser par exemple à semi-conducteur, par exemple disposée sur un circuit imprimé (PCB pour *Printed Circuit Board,* en anglais) assurant la connexion électrique de la source de lumière 32.

Un diffuseur et un diaphragme (non représentés) peuvent être placés en aval de la source lumineuse 32 suivant la direction d'éclairement. Le diffuseur est adapté à mettre en forme le faisceau lumineux émis par la source de lumière 32, pour notamment s'affranchir de contraintes de positionnement de la source de lumière 32 par rapport au diaphragme. Autrement dit, l'utilisation d'un tel diffuseur peut permettre d'utiliser une source de lumière 32 légèrement décentrée par rapport à l'ouverture du diaphragme. Le diffuseur peut être du type *Light Shaping Diffuser* commercialisé par la société Luminit. La source de lumière 32 et la fenêtre transparente 12B sont ici séparées l'une de l'autre par une cavité assurant la transmission du rayonnement lumineux émis par la source de lumière approximativement sans absorption. Cette cavité permet d'écarter la source de lumière de la distance voulue vis-à-vis de la chambre de mesure 11, par exemple de l'ordre de quelques centimètres, par exemple 5cm, notamment lorsqu'une technique d'imagerie sans lentille est mise en œuvre.

Le dispositif de mesure optique 30 comporte un photodétecteur 33 positionné derrière la fenêtre transparente 12A suivant la direction d'éclairement. Le photodétecteur 33 est adapté à recevoir des faisceaux lumineux provenant de l'échantillon liquide. Ces faisceaux incidents sur le photodétecteur 33 peuvent être émis par l'échantillon liquide en réponse à l'illumination par une source de lumière 32 et/ou correspondre à une partie des faisceaux d'illumination transmise par l'échantillon liquide en étant éventuellement réfractée ou diffractée. Les faisceaux détectés peuvent être dans une gamme spectrale couvrant l'infrarouge et/ou le visible et/ou l'ultraviolet. Le photodétecteur 33 peut être de type capteur de type CCD (pour *Charge Coupled Device,* en anglais) ou un capteur de type CMOS (pour *Complementary Metal-Oxyde Semiconductor,* en anglais), et est avantageusement matriciel dans le but d'acquérir une image de l'échantillon liquide.

Le dispositif de mesure optique 30 peut être adapté à réaliser une mesure optique selon la technique dite d'imagerie sans lentille. C'est le cas notamment lorsque les analytes à détecter dans l'échantillon liquide sont des objets diffractants vis-à-vis de la longueur d'onde d'émission de la source de lumière 32. Pour cela, la source de lumière 32 est choisie de manière à émettre des faisceaux d'illumination spatialement cohérents. Il peut s'agir par exemple d'une diode laser, par exemple à semi-conducteur, voire d'une diode électroluminescente munie du diaphragme permettant d'augmenter la cohérence spatiale du rayonnement émis, ou encore d'une diode électroluminescente dont les dimensions sont suffisamment réduites pour ne pas avoir à utiliser de diaphragme, par exemple le diamètre de la diode étant inférieur au dixième de la distance séparant la diode du site de mesure. Le photodétecteur 33 est matriciel pour ainsi acquérir des images du rayonnement transmis et/ou diffracté par les analytes présents dans l'échantillon liquide. Il est placé à une distance de la surface de mesure 12A avantageusement inférieure ou égale à 1cm, par exemple comprise entre 100µm et quelques millimètres. La faible distance entre la chambre de mesure 11 et le photodétecteur 33 permet de limiter les phénomènes d'interférence entre les figures de diffraction lorsque la chambre de mesure 11 est éclairée. On peut éviter le recours à une optique de grossissement qui serait placée entre la seconde surface de mesure et le photodétecteur. Un réseau de microlentilles, chacune étant placée devant un pixel du photodétecteur, peut être prévu pour améliorer la collecte optique du photodétecteur, sans pour autant qu'une fonction de grossissement soit assurée. Une technique de mesure et de traitement des images de diffraction acquises par le photodétecteur telle que décrite dans la demande WO2015/011096 peut être mise en œuvre dans le but de discriminer les cellules vivantes des cellules mortes.

Par ailleurs, le système d'analyse 1 est électriquement connecté à une unité de traitement (non représentée) qui assure le traitement des données mesurées. L'unité de traitement peut être connectée à un écran d'affichage pour permettre l'affichage d'informations à destination de l'utilisateur. De manière classique, l'unité de traitement comporte un processeur et une mémoire apte à stocker et mettre en œuvre un logiciel de traitement des données mesurées.

Un dispositif d'actionnement 40 est prévu pour assurer le déplacement contrôlé en translation suivant l'axe Z des fenêtres transparentes 12A, 12B l'une par rapport à l'autre. Il comporte dans cet exemple un boîtier 4 dans lequel est engagé le dispositif de confinement 10, un organe de déplacement 41, 42 adapté à déplacer ici la surface de mesure 12B suivant l'axe Z, et un actionneur 43 adapté à assurer le mouvement de l'organe de déplacement 41, 42 entraînant la modification de l'épaisseur de la chambre de mesure 11.

Dans cet exemple, l'organe de déplacement 41, 42 comporte une plaque d'appui 41, rigide et mobile en translation suivant l'axe Z, fixée ici à la fenêtre transparente 12B par l'intermédiaire de la portion de fixation 16B. Par ailleurs, la fenêtre transparente 12A repose sur un support 5 du boîtier 4. L'organe de déplacement comporte en outre une portion d'appui 42, fixée à la plaque d'appui 41, qui peut être déplacée en translation suivant l'axe Z par un actionneur 43, ici une vis sans fin couplée à un moteur rotatif, assemblé au boîtier 4. Ainsi, la translation suivant l'axe Z de la plaque d'appui 41 provoque la translation suivant l'axe Z de la surface de mesure 12B et donc la variation de l'épaisseur de la chambre de mesure 11.

Comme mentionné précédemment, en variante ou en complément aux organes de butée situés dans la chambre de mesure 11, l'épaisseur minimale eₘₑₛ de mesure de la chambre de mesure 11 peut être obtenue à l'aide d'au moins un organe de butée limitant la course de déplacement de la plaque de l'organe de déplacement. Elle peut également être obtenue sans organe de butée spécifique, mais par la précision de course de l'actionneur ou de l'organe de déplacement.

Bien entendu, d'autres dispositifs de déplacement peuvent convenir. Ainsi, le dispositif de déplacement peut comprendre un actionneur fluido-mécanique, par exemple du type pneumatique. La surface mobile de mesure est alors assemblée à un vérin pneumatique, plus précisément à la tige du piston du vérin. L'actionnement du vérin provoque le déplacement de la surface de mesure 13B de manière à obtenir l'épaisseur désirée de la chambre de mesure 11, les surfaces de mesure 13A, 13B pouvant ainsi occuper les différentes configurations rapprochée et écartée. Selon un autre exemple, le dispositif d'actionnement peut être actionné de manière électromagnétique. Ainsi, le dispositif d'actionnement peut comporter un organe électromagnétique, par exemple linéaire, tel qu'un électro-aimant. Plus précisément, la surface mobile de mesure 13B est assemblée à l'induit mobile de l'électro-aimant. La surface mobile de mesure 13B peut être, au repos c'est-à-dire lorsque l'électro-aimant n'est pas alimenté en électricité, dans une position écartée, par exemple par l'application d'une force de rappel due à des moyens élastiques, par exemple un ressort. Lorsque l'électro-aimant est alimenté, le champ magnétique généré provoque le déplacement de l'induit mobile et donc le déplacement de la surface mobile de mesure, d'une position écartée à une position rapprochée. De manière alternative, la surface mobile de mesure peut être, au repos, dans une position rapprochée et venir en position écartée lors de l'alimentation électrique de l'électro-aimant. D'autres exemples de dispositifs électromagnétiques de déplacement peuvent être utilisés, comme par exemple des actionneurs rotatifs mono-enroulement associés ou non à un mécanisme d'engrenage, un moteur-couple, voire un actionneur électrodynamique.

Le système d'analyse 1 comporte en outre un dispositif d'écoulement du liquide, apte à assurer l'introduction du liquide dans la chambre de mesure 11 à partir du récipient, ainsi que son évacuation hors de la chambre de mesure 11. Le dispositif d'écoulement peut comporter une pompe à piston, à membrane, ou autre, associée éventuellement à une ou plusieurs valves anti-retour. La pompe peut être formée du dispositif de confinement 10, et plus particulièrement de la chambre de mesure 11, qui, lorsque son épaisseur varie du fait du dispositif d'actionnement, peut assurer le déplacement du liquide par pompage. Ce peut être le cas lorsque le dispositif de confinement 10 ne comporte qu'un seul conduit de prélèvement et d'évacuation. Ce peut également être le cas lorsqu'il comporte un premier conduit de prélèvement et un deuxième conduit d'évacuation raccordés fluidiquement à la chambre de mesure 11, auquel cas le dispositif de confinement 10 peut comporter de préférence deux valves anti-retour assurant ainsi la circulation dans un unique sens du liquide.

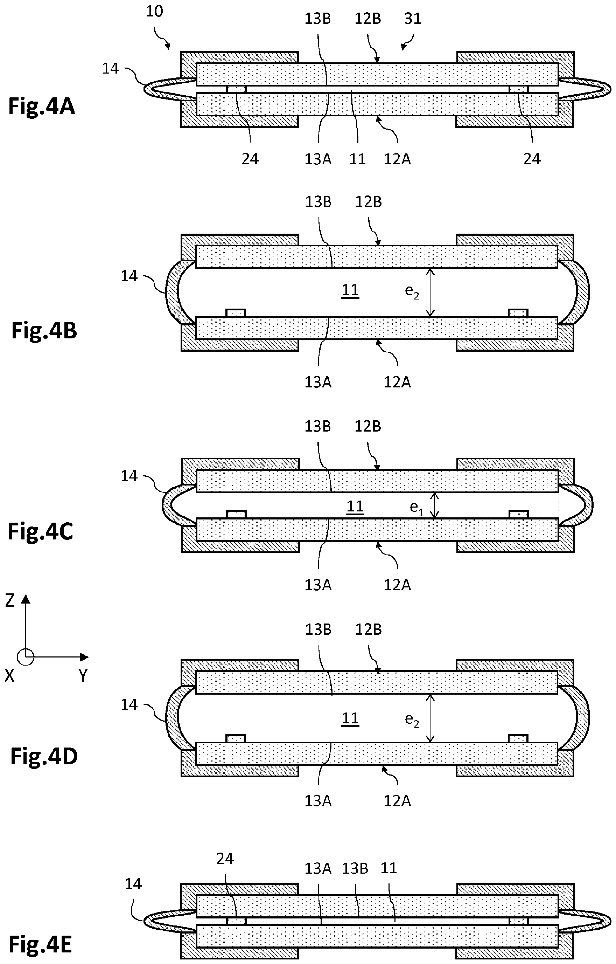

Un exemple de fonctionnement du dispositif de confinement 10 dans le cadre d'un procédé d'analyse d'un échantillon liquide est maintenant décrit, en référence aux figures 4A à 4E. Les figures sont des vues schématiques en coupe transversale dans le plan (Y,Z) du dispositif de confinement 10 au niveau de la chambre de mesure 11.

Un échantillon liquide est introduit dans la chambre de mesure 11 à partir du récipient et au moyen du conduit de prélèvement, celui-ci ayant été préalablement raccordé au récipient.

En référence à la figure 4A, une mesure optique d'au moins une propriété relative à l'échantillon liquide est effectuée. L'épaisseur de la chambre de mesure 11 est alors égale à la valeur minimale de mesure eₘₑₛ, par exemple 20µm. Pour cela, les surfaces de mesure 13A, 13B sont rapprochées l'une de l'autre de manière à ce qu'elles occupent une position rapprochée dans laquelle elles peuvent être en butée l'une contre l'autre au niveau des organes de butée 24. La source de lumière 32 émet alors un rayonnement lumineux qui est transmis par la fenêtre mobile et illumine l'échantillon liquide situé entre les deux surfaces de mesure 13A, 13B au niveau de la zone de mesure 31. Le photodétecteur 33 acquiert un rayonnement lumineux provenant de l'échantillon liquide illuminé, par exemple une partie du rayonnement incident sur l'échantillon liquide diffracté par les analytes et formant des figures de diffraction. La valeur minimale de mesure peut être ajustée en fonction notamment de la concentration des analytes présents dans l'échantillon liquide, de manière à optimiser la précision, la résolution et/ou la robustesse de la technique optique mise en œuvre.

Une pluralité d'étapes de mesure optique successives peut être effectuée de manière à assurer le contrôle en temps réel du liquide et des analytes présents dans le récipient. Dans le but d'assurer un bon renouvellement de l'échantillon liquide entre deux étapes successives de mesure optique et avantageusement du liquide contenu dans le conduit de prélèvement, et notamment éviter l'obstruction de la chambre de mesure 11 par des analytes présents dans le liquide, au moins une étape de renouvellement de l'échantillon liquide est effectuée à la suite d'une étape de mesure optique. Pour cela, entre deux positions rapprochées des surfaces 13A et 13B à l'épaisseur eₘᵢₙ, on écarte les surfaces 13A, 13B jusqu'à une position écartée de renouvellement pour laquelle l'épaisseur présente la valeur maximale e₂ de renouvellement.

En référence à la figure 4B, les surfaces de mesure 13A, 13B sont écartées l'une de l'autre de manière à occuper une position écartée dite de renouvellement. L'épaisseur de la chambre de mesure 11 est alors supérieure à l'épaisseur de mesure et de préférence supérieure ou égale à quelques millimètres, par exemple égale à 1mm, 3mm voire à 5mm. Elle présente la valeur maximale e₂ de renouvellement. Cette étape d'écartement des surfaces de mesure 13A, 13B peut durer quelques secondes à quelques dizaines de minutes, voire davantage. Ainsi, le liquide présent dans la chambre de mesure 11, et avantageusement dans le conduit de prélèvement, est sensiblement entièrement renouvelé.

Une étape de mesure optique peut alors être effectuée dans laquelle les surfaces de mesure 13A et 13B sont rapprochées l'une de l'autre de sorte que l'épaisseur présente la valeur eₘᵢₙ, mais il est avantageux qu'une étape de rapprochement des surfaces de mesure 13A, 13B, suivie d'une nouvelle étape d'écartement des surfaces de mesure 13A, 13B, soit effectuée avant l'étape suivante de mesure optique.

En référence à la figure 4C, les surfaces de mesure 13A, 13B sont rapprochées l'une de l'autre de manière à ce que l'épaisseur de la chambre de mesure 11 corresponde à la valeur basse e₁ de renouvellement. Cette valeur basse est supérieure ou égale à la valeur de mesure, et inférieure à la valeur maximale de renouvellement, par exemple de l'ordre de 500µm. Le liquide présent initialement dans la chambre de mesure 11 peut alors être réintroduit dans le récipient, dans le cadre d'une analyse en ligne.

En référence à la figure 4D, une nouvelle étape d'écartement des surfaces de mesure 13A, 13B est effectuée. L'épaisseur de la chambre de mesure 11 présente alors une valeur supérieure à la valeur basse e₁ de renouvellement, par exemple la valeur maximale e₂. On obtient ainsi un nouveau renouvellement du liquide présent dans le dispositif de confinement.

En référence à la figure 4E, une nouvelle étape de mesure optique est effectuée au cours de laquelle les surfaces de mesure 13A, 13B sont rapprochées l'une de l'autre de manière à ce que l'épaisseur du site de mesure présente la valeur minimale eₘₑₛ de mesure.

Ainsi, on effectue une pluralité d'étapes de mesure optique, et entre deux étapes successives de mesure, on effectue au moins une étape d'écartement des surfaces de mesure 13A, 13B jusqu'à l'épaisseur maximale de renouvellement puis une étape de rapprochement des surfaces de mesure jusqu'à l'épaisseur minimale eₘᵢₙ de mesure, et avantageusement une pluralité d'étape d'écartement et de rapprochement des surfaces de mesure 13A, 13B, de manière à assurer un bon renouvellement du liquide présent dans la chambre de mesure 11 et de préférence également du liquide présent dans le tube de prélèvement. On évite également la sédimentation et le colmatage de la chambre de mesure 11 par des analytes d'intérêt ainsi que du tube de prélèvement.

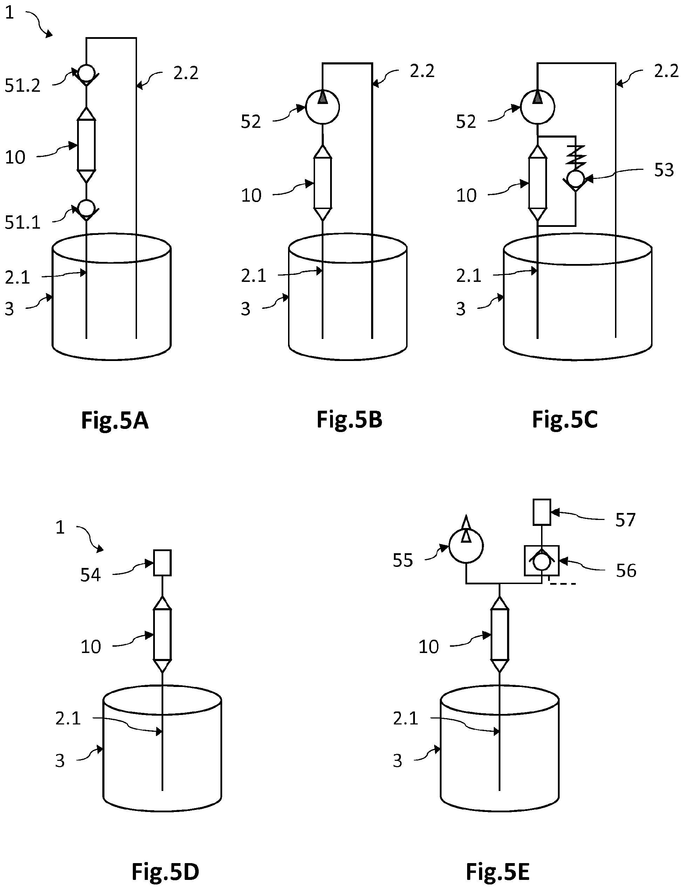

Les figures 5A à 5E illustrent de manière schématique différentes variantes du système d'analyse 1 raccordé fluidiquement au récipient 3. Les figures 5A à 5C illustrent des exemples dans lesquels le système d'analyse 1 comporte une boucle de recirculation, et les figures 5D et 5E illustrent des exemples dans lesquels le système d'analyse 1 comporte un unique conduit 2.1 de prélèvement et d'évacuation du liquide.

En référence à la figure 5A, le système d'analyse 1 forme une boucle de recirculation vis-à-vis du récipient 3. Ainsi, le dispositif de confinement 10 comporte un premier conduit de prélèvement 2.1 et un second conduit d'évacuation 2.2, ces conduits étant raccordés mécaniquement au récipient 3 de manière étanche et sont en partie introduits à l'intérieur de ce dernier. Le liquide circule au sein de cette boucle de recirculation à partir du tube de prélèvement 2.1 en direction du tube d'évacuation 2.2, en passant par la chambre de mesure du dispositif de confinement 10. Pour cela, deux valves anti-retour 51.1, 51.2 sont disposées en série avec le dispositif de confinement 10 et plus particulièrement avec la chambre de mesure, et de part et d'autre de celle-ci. Le dispositif d'écoulement est alors formé du dispositif de confinement 10 associé au dispositif d'actionnement (non représenté) et des deux valves anti-retour 51.1, 51.2. Ainsi, un écartement des fenêtres transparentes de la chambre de mesure (et donc une augmentation de l'épaisseur de la chambre de mesure) assure l'écoulement du liquide dans le conduit 2.1 à partir du récipient 3 jusque dans la chambre de mesure, et un rapprochement des fenêtres transparentes (et donc une diminution de l'épaisseur de la chambre de mesure) assure l'évacuation du liquide hors de la chambre de mesure dans le conduit 2.2, et jusqu'au récipient 3. L'actionnement de la chambre de mesure assure donc le pompage du liquide et son écoulement dans le conduit 2.1, dans la chambre de mesure, et dans le conduit 2.2, avant d'être réinjecté dans le récipient 3.

En référence à la figure 5B, le système d'analyse 1 forme également une boucle de recirculation par la connexion fluidique du conduit de prélèvement 2.1, du dispositif de confinement 10 et du conduit d'évacuation 2.2. Le dispositif d'écoulement comporte ici une pompe hydraulique 52 à une seule direction de flux, connectée fluidiquement en série avec le dispositif de confinement 10. Ainsi, l'activation de la pompe 52 assure l'écoulement du liquide dans le conduit 2.1 puis le conduit 2.2, en passant par la chambre de mesure, avant d'être réinjecté dans le récipient 3. Dans cet exemple, la pompe 52 est de préférence activée lorsque l'épaisseur de la chambre de mesure est supérieure à la valeur minimale de mesure, autorisant ainsi l'écoulement du liquide au sein de la chambre.

En référence à la figure 5C, le système d'analyse 1 est similaire à celui décrit sur la figure 5B et s'en distingue en ce qu'il comporte une valve *bypass* 53 connectée en parallèle au dispositif de confinement 10. Une valve *bypass* est une valve qui comporte un seuil de basculement entre son état passant et son état bloquant. Dans cette configuration, la pompe 52 peut être activée de manière permanente, notamment lorsqu'une étape de mesure optique est effectuée. Plus précisément, lorsqu'une étape de mesure optique est effectuée, la chambre de mesure présente l'épaisseur minimale eₘₑₛ de mesure optique, qui se traduit par une résistance hydraulique locale importante, provoquant alors l'ouverture de la valve *bypass* 53. Ainsi, lors d'une étape de mesure, le liquide ne traverse par la chambre de mesure mais continue de s'écouler en traversant la valve *bypass* 53. Entre deux étapes successives de mesure optique, la chambre de mesure présente une épaisseur supérieure à la valeur minimale de mesure, qui se traduit par une résistance hydraulique locale plus faible, provoquant alors la fermeture de la valve *bypass* 53. Le liquide peut alors traverser la chambre de mesure et non plus la valve *by-pass* 53. Le renouvellement du liquide dans les conduits 2.1 et 2.2 est alors assuré continuellement.

En référence à la figure 5D, le système d'analyse 1 comporte un unique tube 2.1 qui assure à la fois le prélèvement du liquide à partir du récipient 3 et son introduction dans la chambre de mesure 11, et l'évacuation du liquide hors de la chambre de mesure 11 pour être réinjecté dans le récipient 3. Le tube de prélèvement et d'évacuation 2.1 est connecté fluidiquement à un orifice d'entrée et de sortie du liquide du dispositif de confinement 10. Ce dernier comporte ici un deuxième orifice qui assure la connexion fluidique de la chambre de mesure 11 à une poche 54 de réception de bulles de gaz, de préférence étanche. Le dispositif d'écoulement est formé ici uniquement du dispositif de confinement 10 associé au dispositif d'actionnement. Ainsi, un écartement des fenêtres transparentes se traduit par une aspiration du liquide à partir du récipient 3 jusque dans la chambre de mesure, et un rapprochement des fenêtres provoque l'évacuation du liquide hors de la chambre et sa réinjection dans le récipient 3. La poche 54 est facultative et assure la réception d'éventuelles bulles de gaz. Lors du rapprochement des fenêtres du dispositif de confinement 10, la poche 54 peut être compressée ou comprimée de sorte que le gaz présent est alors évacué hors de la poche, par exemple via le conduit 2.1.

Dans cet exemple, le dispositif de confinement est placé au-dessus du conduit 2.1 suivant l'axe de la gravité. En variante, il peut être retourné de sorte que le conduit 2.1 est placé au-dessus du dispositif de confinement. Dans ce cas de figure, la poche 54 peut être supprimée dans la mesure où les bulles de gaz éventuellement présentes dans la chambre de mesure sont évacuées naturellement lors des phases de pompage (écartement et rapprochement des fenêtres transparentes de la chambre de mesure).

En référence à la figure 5E, le système d'analyse 1 se distingue de celui décrit sur la figure 5D essentiellement en ce que le dispositif d'écoulement comporte une pompe à vide 55 connectée fluidiquement à la chambre de mesure, ainsi qu'un réservoir 57 de gaz sous pression raccordé en série à une valve anti-retour 56 commandée à l'ouverture. La pompe à vide 55 est connectée en parallèle au réservoir 57 et à la valve 56, et en communication fluidique avec la chambre de mesure au niveau de son extrémité opposée au conduit 2.1. L'activation de la pompe à vide 55 assure l'aspiration du liquide à partir du récipient 3 et son introduction dans la chambre de mesure. Une étape de mesure optique peut être effectuée. Puis, la pompe à vide 55 est désactivée et la valve 56 est ouverte. Le gaz sous pression assure l'évacuation du liquide hors de la chambre de mesure. Une alternance de ces étapes permet le renouvellement du liquide dans le conduit 2.1 et la chambre de mesure. La stérilité avec l'environnement du système d'analyse 1, notamment au niveau de la pompe à vide 55, peut être assurée par l'utilisation d'un filtre dont la taille moyenne des pores est inférieure ou égale à 0,22mm.

Des modes de réalisation particuliers viennent d'être décrits. Différentes variantes et modifications apparaîtront à l'homme du métier. D'une manière générale, le dispositif de confinement 10 peut se trouver au-dessus ou en-dessous de l'extrémité du tube de prélèvement 2.1 située dans le récipient 3.

Par ailleurs, on a décrit une source de lumière située du côté de la fenêtre transparente mobile 12B et le photodétecteur situé du côté de la fenêtre transparente fixe 12A. De manière alternative, la source de lumière peut être située du côté de la fenêtre transparente fixe 12A et le photodétecteur du côté de la fenêtre transparente mobile 12B.

Par ailleurs, de manière alternative ou complémentaire aux modes décrits précédemment, la fenêtre transparente 12A peut être mobile relativement à la fenêtre transparente 12B, cette dernière étant alors mobile ou fixe par rapport au boîtier 4. Dans ce cas, le dispositif d'actionnement 40 comporte en outre des éléments de déplacement supplémentaires, similaires ou identiques aux éléments 40, 41, 42 décrits précédemment.

Enfin, les différentes variantes illustrées sur les figures 5A-5E sont décrites à titre uniquement illustratif. D'autres variantes du dispositif d'écoulement sont possibles notamment en termes de nombre et agencement des différents éléments hydrauliques tels que les valves et les pompes.

## Revendications

1. Système d'analyse (1), comportant :
- un dispositif de confinement (10) d'un échantillon liquide destiné à être analysé, comportant une chambre de mesure (11) apte à recevoir ledit échantillon liquide, et délimitée au moins en partie par une première et une deuxième surfaces (13A, 13B), dites de mesure, lesdites surfaces de mesure (13A, 13B) étant transparentes vis-à-vis d'un rayonnement lumineux dit de mesure, et disposées en regard l'une de l'autre de sorte qu'une distance entre lesdites surfaces de mesure (13A, 13B) définit une épaisseur de la chambre de mesure (11), au moins une première surface de mesure (13B) étant mobile relativement à la deuxième surface de mesure (13A), de manière à permettre une variation de l'épaisseur de la chambre de mesure (11) ; et comportant en outre au moins un conduit de prélèvement (2.1, 2.2) communiquant fluidiquement avec la chambre de mesure (11), et destiné à être raccordé de manière étanche à un récipient (3) de façon à pouvoir prélever l'échantillon liquide dudit récipient (3) ;
- un dispositif de mesure optique (30) adapté à émettre un rayonnement lumineux de mesure en direction de la chambre de mesure (11), et à détecter un rayonnement lumineux transmis par la chambre de mesure (11), celle-ci présentant une épaisseur égale à une valeur minimale (eₘₑₛ) dite de mesure ;
- un dispositif d'écoulement adapté à provoquer au moins l'écoulement de liquide dans le conduit de prélèvement (2.1) à partir du récipient (3) jusqu'à la chambre de mesure (11) ;
- un dispositif d'actionnement (40) adapté à assurer un déplacement relatif des surfaces de mesure (13A, 13B) l'une par rapport à l'autre se traduisant par une variation de l'épaisseur de la chambre de mesure (11), et ainsi un écartement des deux surfaces de mesure (13A, 13B) l'une de l'autre de manière à permettre un renouvellement du liquide présent dans la chambre de mesure (11), l'épaisseurde la chambre de mesure (11) étant égale à une valeur maximale (e₂) dite de renouvellement, celle-ci étant supérieure à la valeur minimale de mesure (eₘₑₛ) ;
**caractérisé en ce que** :
• la chambre de mesure (11) est en outre délimitée latéralement par une membrane flexible (14) fixée de manière étanche aux surfaces de mesure (13A, 13B), autorisant la variation de l'épaisseur de la chambre de mesure (11) ;
• le dispositif d'écoulement (50) comporte le dispositif de confinement (10) associé au dispositif d'actionnement (40), de sorte qu'une augmentation de l'épaisseur de la chambre de mesure (11) provoque l'écoulement de liquide dans le conduit de prélèvement (2.1) à partir du récipient (3) jusqu'à la chambre de mesure (11).

2. Système d'analyse (1) selon la revendication 1, comportant en outre deux valves anti-retour (51.1, 51.2) disposées en série avec la chambre de mesure (11) de part et d'autre de celle-ci, et un conduit de prélèvement (2.1) et un conduit d'évacuation (2.2) auxquels est raccordée la chambre de mesure (11), le dispositif d'écoulement (50) comportant alors le dispositif de confinement (10) associé au dispositif d'actionnement (40) et les deux valves anti-retour (51.1, 51.2).

3. Système d'analyse (1) selon la revendication 1, comportant un unique conduit de prélèvement et d'évacuation (2.1) raccordé fluidiquement à un même orifice d'entrée et de sortie de liquide du dispositif de confinement (10) et une poche de réception de bulles de gaz (54) raccordée fluidiquement à un deuxième orifice du dispositif de confinement (10).

4. Système d'analyse (1) selon l'une quelconque des revendications 1 à 3, dans lequel le dispositif de mesure optique (30) comporte une source de lumière (32) disposée en regard de la première surface de mesure (13B) et un photodétecteur (33) disposé en regard de la deuxième surface de mesure (13A), la source de lumière (32) étant disposée à une distance supérieure ou égale à 1cm de la première surface de mesure (13B) et/ou le photodétecteur (33) étant disposé à une distance inférieure ou égale à 1cm de la deuxième surface de mesure (13A).

5. Système d'analyse (1) selon l'une quelconque des revendications 1 à 4, dans lequel le dispositif d'actionnement (40) comporte un organe de déplacement (41, 42) adapté à déplacer au moins une surface de mesure (13B) suivant un axe sensiblement orthogonal aux surfaces de mesure (13A, 13B), et un actionneur (43) adapté à déplacer l'organe de déplacement (41, 42), de manière à assurer une variation de l'épaisseur de la chambre de mesure (11).

6. Système d'analyse (1) selon l'une quelconque des revendications 1 à 5, comprenant au moins un organe de butée (24) disposé sur la première et/ou la deuxième surface de mesure (13A, 13B) de manière à former une butée entre les deux surfaces de mesure, et/ou dans le dispositif d'actionnement de manière à limiter le déplacement de l'organe de déplacement (41, 42), définissant ainsi une épaisseur minimale de la chambre de mesure (11), celle-ci étant inférieure ou égale à 500µm.

7. Système d'analyse (1) selon l'une quelconque des revendications 1 à 6, dans lequel le dispositif de confinement (10) comporte deux plaques rigides (12A, 12B) dont une face interne (13A, 13B) de chaque plaque forme l'une desdites surfaces de mesure, la membrane flexible (14) étant fixée à la bordure de chaque plaque rigide (12A, 12B) par une portion de fixation (16A, 16B).

8. Système d'analyse (1) selon la revendication 7, dans lequel chaque portion de fixation (16A, 16B) est fixée à une plaque rigide (12A, 12B) au niveau d'une face externe (15A, 15B) opposée à la surface de mesure (13A, 13B) correspondante et/ou à une face latérale (17A, 17B) de la plaque rigide (12A, 12B).

9. Système d'analyse (1) selon la revendication 7 ou 8, dans lequel les portions de fixation (16A, 16B) et la membrane flexible (14) sont réalisées d'un seul tenant et en un même matériau.

10. Système d'analyse (1) selon l'une quelconque des revendications 1 à 9, dans lequel le dispositif de confinement (10) comporte une partie de raccordement (19), comprenant une portion de connexion fluidique (20) comportant un conduit d'admission (21) apte à être raccordé au conduit de prélèvement (2.1) et dont des dimensions transversales sont sensiblement constantes lors d'une variation de l'épaisseur de la chambre de mesure (11), et une portion intermédiaire (22) assurant la connexion fluidique et la jonction mécanique entre le conduit d'admission (21) et la chambre de mesure (11).

11. Procédé d'analyse (1) d'un échantillon liquide présent dans un système d'analyse (1) selon l'une quelconque des revendications 1 à 10, comportant les étapes suivantes :
• introduction d'un échantillon liquide dans la chambre de mesure (11) à partir d'un récipient (3) ;
• mesure optique d'au moins une propriété relative à l'échantillon liquide présent dans la chambre de mesure (11), l'épaisseur de la chambre de mesure (11) étant égale à une valeur minimale (eₘₑₛ) dite de mesure et
• au moins un écartement des deux surfaces de mesure (13A, 13B) l'une de l'autre de manière à permettre un renouvellement du liquide présent dans la chambre de mesure (11), l'épaisseur de la chambre de mesure (11) étant égale à une valeur maximale (e₂) dite de renouvellement, celle-ci étant supérieure à la valeur minimale de mesure (eₘₑₛ).

12. Procédé d'analyse selon la revendication 11, comportant plusieurs étapes de mesure optique successives, au moins une séquence d'une étape d'écartement suivie d'une étape de rapprochement des deux surfaces de mesure l'une par rapport à l'autre étant effectuées entre deux étapes de mesure optique successives, de sorte que l'épaisseur de la chambre de mesure augmente de la valeur minimale de mesure (eₘₑₛ) jusqu'à au moins la valeur maximale (e₂), puis diminue jusqu'à la valeur minimale de mesure (eₘₑₛ)..

13. Procédé d'analyse selon la revendication 11 ou 12, dans lequel la valeur maximale (e₂) de renouvellement est telle que le volume de liquide contenu dans la chambre de mesure (11) lors de l'étape d'écartement est au minimum 10 fois supérieure au volume de liquide contenu dans la chambre de mesure (11) lors de l'étape de mesure optique.

14. Procédé d'analyse selon l'une quelconque des revendications 11 à 13, dans lequel la valeur maximale (e₂) de renouvellement est telle que le volume de liquide contenu dans la chambre de mesure (11) et dans le conduit de prélèvement (2.1) lors de l'étape d'écartement est au minimum 10 fois supérieure au volume de liquide contenu dans la chambre de mesure (11) et dans le conduit de prélèvement (2.1) lors de l'étape de mesure optique.

15. Procédé d'analyse selon l'une quelconque des revendications 11 à 14, comportant plusieurs étapes de mesure optique, au moins une séquence d'une étape d'écartement et d'une étape de rapprochement des deux surfaces de mesure (13A, 13B) l'une par rapport à l'autre étant effectuées entre deux étapes de mesure optique successives, l'épaisseur de la chambre de mesure (11) lors de l'étape de rapprochement étant égale à une valeur basse (e₁) dite de renouvellement, celle-ci étant inférieure à la valeur maximale (e₂) de renouvellement et supérieure ou égale à la valeur de mesure (eₘₑₛ).

## Patentansprüche

1. Analysesystem (1), umfassend:
- eine Begrenzungsvorrichtung (10) für eine flüssige Probe, die analysiert werden soll, welche eine Messkammer (11) umfasst, die geeignet ist, die flüssige Probe aufzunehmen, und wenigstens teilweise von einer ersten und einer zweiten Fläche (13A, 13B), Messflächen genannt, begrenzt wird, wobei die Messflächen (13A, 13B) durchlässig gegenüber einer Lichtstrahlung, Messlichtstrahlung genannt, sind und einander gegenüber so angeordnet sind, dass ein Abstand zwischen den Messflächen (13A, 13B) eine Dicke der Messkammer (11) definiert, wobei wenigstens eine erste Messfläche (13B) beweglich in Bezug auf die zweite Messfläche (13A) ist, um so eine Änderung der Dicke der Messkammer (11) zu ermöglichen; und welche außerdem wenigstens eine Entnahmeleitung (2.1, 2.2) umfasst, die mit der Messkammer (11) in Fluidverbindung steht und dazu bestimmt ist, dicht an einen Behälter (3) angeschlossen zu werden, um die flüssige Probe aus dem Behälter (3) entnehmen zu können;
- eine optische Messvorrichtung (30), die dafür eingerichtet ist, eine Messlichtstrahlung in Richtung der Messkammer (11) auszusenden und eine Lichtstrahlung zu detektieren, die von der Messkammer (11) übertragen wird, wobei diese eine Dicke aufweist, die gleich einem minimalen Wert (eₘₑₛ), Messungswert genannt, ist;
- eine Strömungsvorrichtung, die dafür eingerichtet ist, wenigstens das Strömen von Flüssigkeit in der Entnahmeleitung (2.1) vom Behälter (3) bis zur Messkammer (11) hervorzurufen;
- eine Betätigungsvorrichtung (40), die dafür eingerichtet ist, eine relative Verschiebung der Messflächen (13A, 13B) zueinander, die in einer Änderung der Dicke der Messkammer (11) zum Ausdruck kommt, und so ein Entfernen der zwei Messflächen (13A, 13B) voneinander hervorzurufen, um so eine Erneuerung der in der Messkammer (11) vorhandenen Flüssigkeit zu ermöglichen, wobei die Dicke der Messkammer (11) gleich einem maximalen Wert (e₂), maximaler Erneuerungswert genannt, ist, wobei dieser größer als der minimale Messungswert (eₘₑₛ) ist;
**dadurch gekennzeichnet, dass**
• die Messkammer (11) außerdem seitlich von einer flexiblen Membran (14) begrenzt wird, die dicht an den Messflächen (13A, 13B) befestigt ist, wobei sie die Änderung der Dicke der Messkammer (11) erlaubt;
• die Strömungsvorrichtung (50) die Begrenzungsvorrichtung (10) umfasst, die mit der Betätigungsvorrichtung (40) verbunden ist, derart, dass eine Vergrößerung der Dicke der Messkammer (11) das Strömen von Flüssigkeit in der Entnahmeleitung (2.1) vom Behälter (3) bis zur Messkammer (11) hervorruft.

2. Analysesystem (1) nach Anspruch 1, welches außerdem zwei Rückschlagventile (51.1, 51.2), die mit der Messkammer (11) in Reihe beiderseits derselben angeordnet sind, und eine Entnahmeleitung (2.1) und eine Auslassleitung (2.2), an welche die Messkammer (11) angeschlossen ist, umfasst, wobei die Strömungsvorrichtung (50) dann die Begrenzungsvorrichtung (10), die mit der Betätigungsvorrichtung (40) verbunden ist, und die zwei Rückschlagventile (51.1, 51.2) umfasst.

3. Analysesystem (1) nach Anspruch 1, welches eine einzige Entnahme- und Auslassleitung (2.1), die mit ein und derselben Flüssigkeitseintritts- und -austrittsöffnung der Begrenzungsvorrichtung (10) fluidisch verbunden ist, und eine Aufnahmetasche für Gasblasen (54), die mit einer zweiten Öffnung der Begrenzungsvorrichtung (10) fluidisch verbunden ist, umfasst.

4. Analysesystem (1) nach einem der Ansprüche 1 bis 3, wobei die optische Messvorrichtung (30) eine Lichtquelle (32), die gegenüber der ersten Messfläche (13B) angeordnet ist, und einen Photodetektor (33), der gegenüber der zweiten Messfläche (13A) angeordnet ist, umfasst, wobei die Lichtquelle (32) in einem Abstand, der größer oder gleich 1 cm ist, von der ersten Messfläche (13B) angeordnet ist und/oder der Photodetektor (33) in einem Abstand, der kleiner oder gleich 1 cm ist, von der zweiten Messfläche (13A) angeordnet ist.

5. Analysesystem (1) nach einem der Ansprüche 1 bis 4, wobei die Betätigungsvorrichtung (40) ein Verschiebungsorgan (41, 42), das dafür eingerichtet ist, wenigstens eine Messfläche (13B) entlang einer zu den Messflächen (13A, 13B) im Wesentlichen orthogonalen Achse zu verschieben, und einen Stellantrieb (43), der dafür eingerichtet ist, das Verschiebungsorgan (41, 42) zu verschieben, um so eine Änderung der Dicke der Messkammer (11) sicherzustellen, umfasst.

6. Analysesystem (1) nach einem der Ansprüche 1 bis 5, welches wenigstens ein Anschlagorgan (24) umfasst, das an der ersten und/oder der zweiten Messfläche (13A, 13B) angeordnet ist, um so einen Anschlag zwischen den zwei Messflächen zu bilden, und/oder in der Betätigungsvorrichtung, um so die Verschiebung des Verschiebungsorgans (41, 42) zu begrenzen, wobei so eine minimale Dicke der Messkammer (11) definiert wird, wobei diese kleiner oder gleich 500 µm ist.

7. Analysesystem (1) nach einem der Ansprüche 1 bis 6, wobei die Begrenzungsvorrichtung (10) zwei starre Platten (12A, 12B) umfasst, wobei eine Innenseite (13A, 13B) jeder Platte eine der Messflächen bildet, wobei die flexible Membran (14) an der Umrandung jeder starren Platte (12A, 12B) durch einen Befestigungsabschnitt (16A, 16B) befestigt ist.

8. Analysesystem (1) nach Anspruch 7, wobei jeder Befestigungsabschnitt (16A, 16B) an einer starren Platte (12A, 12B) an einer Außenseite (15A, 15B), die der entsprechenden Messfläche (13A, 13B) gegenüberliegt, und/oder an einer Seitenfläche (17A, 17B) der starren Platte (12A, 12B) befestigt ist.

9. Analysesystem (1) nach Anspruch 7 oder 8, wobei die Befestigungsabschnitte (16A, 16B) und die flexible Membran (14) aus einem Stück und aus demselben Material hergestellt sind.

10. Analysesystem (1) nach einem der Ansprüche 1 bis 9, wobei die Begrenzungsvorrichtung (10) einen Anschlussteil (19) aufweist, der einen Fluidverbindungsabschnitt (20) umfasst, der eine Einlassleitung (21), die an die Entnahmeleitung (2.1) anschließbar ist und deren Querabmessungen bei einer Änderung der Dicke der Messkammer (11) im Wesentlichen konstant sind, und einen Zwischenabschnitt (22), der die Fluidverbindung und die mechanische Verbindung zwischen der Einlassleitung (21) und der Messkammer (11) sicherstellt, aufweist.

11. Analyseverfahren (1) für eine flüssige Probe, die in einem Analysesystem (1) nach einem der Ansprüche 1 bis 10 vorhanden ist, die folgenden Schritte umfassend:
• Einführung einer flüssigen Probe in die Messkammer (11) aus einem Behälter (3);
• optische Messung wenigstens einer Eigenschaft in Bezug auf die in der Messkammer (11) vorhandene flüssige Probe, wobei die Dicke der Messkammer (11) gleich einem minimalen Wert (eₘₑₛ), Messungswert genannt, ist; und
• wenigstens ein Entfernen der zwei Messflächen (13A, 13B) voneinander, um so eine Erneuerung der in der Messkammer (11) vorhandenen Flüssigkeit zu ermöglichen, wobei die Dicke der Messkammer (11) gleich einem maximalen Wert (e₂), maximaler Erneuerungswert genannt, ist, wobei dieser größer als der minimale Messungswert (eₘₑₛ) ist.

12. Analyseverfahren nach Anspruch 11, welches mehrere aufeinander folgende Schritte der optischen Messung umfasst, wobei wenigstens eine Ablauffolge aus einem Schritt des Entfernens, gefolgt von einem Schritt der Annäherung der zwei Messflächen voneinander bzw. aneinander zwischen zwei aufeinander folgenden Schritten der optischen Messung ausgeführt wird, derart, dass sich die Dicke der Messkammer von dem minimalen Messungswert (eₘₑₛ) bis zu mindestens dem maximalen Wert (e₂) vergrößert und danach bis zu dem minimalen Messungswert (eₘₑₛ) verringert.

13. Analyseverfahren nach Anspruch 11 oder 12, wobei der maximale Erneuerungswert (e₂) ein solcher Wert ist, dass das Flüssigkeitsvolumen, das im Schritt des Entfernens in der Messkammer (11) enthalten ist, mindestens 10-mal so groß wie das Flüssigkeitsvolumen ist, das im Schritt der optischen Messung in der Messkammer (11) enthalten ist.

14. Analyseverfahren nach einem der Ansprüche 11 bis 13, wobei der maximale Erneuerungswert (e₂) ein solcher Wert ist, dass das Flüssigkeitsvolumen, das im Schritt des Entfernens in der Messkammer (11) und in der Entnahmeleitung (2.1) enthalten ist, mindestens 10-mal so groß wie das Flüssigkeitsvolumen ist, das im Schritt der optischen Messung in der Messkammer (11) und in der Entnahmeleitung (2.1) enthalten ist.

15. Analyseverfahren nach einem der Ansprüche 11 bis 14, welches mehrere Schritte der optischen Messung umfasst, wobei wenigstens eine Ablauffolge aus einem Schritt des Entfernens und einem Schritt der Annäherung der zwei Messflächen (13A, 13B) voneinander bzw. aneinander zwischen zwei aufeinander folgenden Schritten der optischen Messung ausgeführt wird, wobei Dicke der Messkammer (11) im Schritt der Annäherung gleich einem niedrigen Wert (e₁), niedriger Erneuerungswert genannt, ist, wobei dieser kleiner als der maximale Erneuerungswert (e₂) und größer oder gleich dem Messungswert (eₘₑₛ) ist.

## Claims

1. Analysis system (1), comprising:
- a confinement device (10) for confining a liquid sample that is to be analysed, comprising a measurement chamber (11) capable of receiving said liquid sample and delimited at least in part by a first and a second surface (13A, 13B), called the measurement surfaces, said measurement surfaces (13A, 13B) being transparent to a light radiation called the measurement radiation, and being positioned facing one another so that a distance between said measurement surfaces (13A, 13B) defines a thickness of the measurement chamber (11), at least a first measurement surface (13B) being movable relative to the second measurement surface (13A), so as to permit a variation of the thickness of the measurement chamber (11); and also comprising at least one collecting conduit (2.1, 2.2) fluidically communicating with the measurement chamber (11) and intended to be connected in a sealed way to a container (3) so that it can collect the liquid sample from said container (3);
- an optical measurement device (30) capable of emitting measurement light radiation towards the measurement chamber (11), and of detecting light radiation transmitted through the measurement chamber (11), the latter having a thickness equal to a minimum value (eₘₑₛ) called the measurement value;
- a flow device capable of causing at least the flow of liquid in the collecting conduit (2.1) from the container (3) as far as the measurement chamber (11);
- an actuation device (40) capable of bringing about a relative movement of the measurement surfaces (13A, 13B) relative to one another, resulting in a variation in the thickness of the measurement chamber (11), and thus a separation of the two measurement surfaces (13A, 13B) from one another so as to permit renewal of the liquid present in the measurement chamber (11), the thickness of the measurement chamber (11) being equal to a maximum value (e₂) called the renewal value, this being greater than the minimum measurement value (eₘₑₛ):
**characterized in that**:
• the measurement chamber (11) is also delimited laterally by a flexible membrane (14) fixed in a sealed way to the measurement surfaces (13A, 13B), allowing the thickness of the measurement chamber (11) to be varied;
• the flow device (50) comprises the confinement device (10) associated with the actuation device (40), so that increasing the thickness of the measurement chamber (11) causes liquid to flow in the collecting conduit (2.1) from the container (3) as far as the measurement chamber (11).

2. Analysis system (1) according to Claim 1, further comprising two check valves (51.1, 51.2) arranged in series with the measurement chamber (11) on either side thereof, and a collecting conduit (2.1) and a discharge conduit (2.2) to which the measurement chamber (11) is connected, the flow device (50) then comprising the confinement device (10) associated with the actuation device (40) and the two check valves (51.1, 51.2).

3. Analysis system (1) according to Claim 1, comprising a single collecting and discharge conduit (2.1) fluidically connected to the one same liquid inlet and outlet orifice of the confinement device (10) and a gas-bubble collecting pocket (54) fluidically connected to a second orifice of the confinement device (10).

4. Analysis system (1) according to any one of Claims 1 to 3, wherein the optical measurement device (30) comprises a light source (32) positioned facing the first measurement surface (13B) and a photodetector (33) positioned facing the second measurement surface (13A), the light source (32) being positioned at a distance greater than or equal to 1 cm from the first measurement surface (13B), and/or the photodetector (33) being positioned at a distance less than or equal to 1 cm from the second measurement surface (13A).

5. Analysis system (1) according to any one of Claims 1 to 4, wherein the actuation device (40) comprises a movement member (41, 42) capable of moving at least one measurement surface (13B) along an axis substantially orthogonal to the measurement surfaces (13A, 13B), and an actuator (43) capable of moving the movement member (41, 42), so as to provide a variation in the thickness of the measurement chamber (11).

6. Analysis system (1) according to any one of Claims 1 to 5, comprising at least one stop member (24) positioned on the first and/or the second measurement surface (13A, 13B) so as to form a stop between the two measurement surfaces, and/or in the actuation device so as to limit the movement of the movement member (41, 42), thus defining a minimum thickness of the measurement chamber (11), this minimum thickness being less than or equal to 500 µm.

7. Analysis system (1) according to any one of Claims 1 to 6, wherein the confinement device (10) comprises two rigid plates (12A, 12B), an inner face (13A, 13B) of each plate forming one of said measurement surfaces, the flexible membrane (14) being fastened to the edge of each rigid plate (12A, 12B) by a fastening portion (16A, 16B).

8. Analysis system (1) according to Claim 7, wherein each fastening portion (16A, 16B) is fastened to a rigid plate (12A, 12B) at an outer face (15A, 15B), which is opposite the corresponding measurement surface (13A, 13B) and/or opposite a lateral face (17A, 17B) of the rigid plate (12A, 12B).

9. Analysis system (1) according to Claim 7 or 8, wherein the fastening portions (16A, 16B) and the flexible membrane (14) are made in one piece and from the same material.

10. Analysis system (1) according to any one of Claims 1 to 9, wherein the confinement device (10) comprises a connecting part (19) comprising a fluidic-connection portion (20) comprising an inlet conduit (21) able to be connected to the collecting conduit (2.1) and having transverse dimensions which are substantially constant during a variation in the thickness of the measurement chamber (11), and an intermediate portion (22) providing the fluidic connection and mechanical join between the inlet conduit (21) and the measurement chamber (11).

11. Method (1) for analysing a liquid sample present in an analysis system (1) according to any one of Claims 1 to 10, comprising the following steps:
• the introduction of a liquid sample into the measurement chamber (11) from a container (3);
• the optical measurement of at least one property relating to the liquid sample present in the measurement chamber (11), the thickness of the measurement chamber (11) being equal to a minimum value (eₘₑₛ) called the measurement value; and
• at least one separation of the two measurement surfaces (13A, 13B) from one another so as to permit renewal of the liquid present in the measurement chamber (11), the thickness of the measurement chamber (11) being equal to a maximum value (e₂) called the renewal value, this value being greater than the minimum measurement value (eₘₑₛ).

12. Analysis method according to Claim 11, comprising a plurality of successive optical measurement steps, at least one sequence of a separation step followed by a step of bringing the two measurement surfaces towards one another being executed between two successive optical measurement steps, so that the thickness of the measurement chamber increases from the minimum measurement value (eₘₑₛ) to at least the maximum value (e₂), then decreases to the minimum measurement value (eₘₑₛ).

13. Analysis method according to Claim 11 or 12, wherein the maximum renewal value (e₂) is such that the volume of liquid contained in the measurement chamber (11) during the separation step is at least 10 times greater than the volume of liquid contained in the measurement chamber (11) during the optical measurement step.

14. Analysis method according to any one of Claims 11 to 13, wherein the maximum renewal value (e₂) is such that the volume of liquid contained in the measurement chamber (11) and in the collecting conduit (2.1) during the separation step is at least 10 times greater than the volume of liquid contained in the measurement chamber (11) and in the collecting conduit (2.1) during the optical measurement step.

15. Analysis method according to any one of Claims 11 to 14, comprising a plurality of optical measurement steps, at least one sequence of a separation step and a step of bringing the two measurement surfaces (13A, 13B) towards one another being executed between two successive optical measurement steps, the thickness of the measurement chamber (11) during the step of bringing the surfaces towards one another being equal to a low value (e₁) called the renewal value, this being lower than the maximum renewal value (e₂) and greater than or equal to the measurement value (eₘₑₛ).
